# EUROPÄISCHE PATENTANMELDUNG

(11) **EP 3 346 104 A1**
(43) Veröffentlichungstag der Anmeldung: **11.07.2018**
(21) Anmeldenummer: 17208318.0
(22) Anmeldetag: 19.12.2017
(51) Int. Cl.: F01N 3/20

(54) **ABGASANLAGE**

(30) Priorität: 05.01.2017 DE 102017100132
(71) Anmelder: Eberspächer Exhaust Technology GmbH & Co. KG, 66539 Neunkirchen (DE)
(72) Erfinder: Kast, Peter, 73732 Esslingen (DE); Wolf, Tobias, 73257 Köngen (DE); Henzler, Markus, 72661 Grafenberg (DE); Bucher, Torsten, 71404 Korb (DE)
(74) Vertreter: RLTG

(57) **Zusammenfassung**

Eine Abgasanlage für eine Brennkraftmaschine umfasst einen von Abgas in einer Abgashauptströmungsrichtung (A) durchströmbaren Abgasströmungskanal (14) und eine Reaktionsmitteleinspritzanordnung (18) zum Einspritzen von Reaktionsmittel in einem Reaktionsmitteleinspritzbereich (16) des Abgasströmungskanals (14) in einer Reaktionsmittelhaupteinspritzrichtung (R), wobei die Reaktionsmittelhaupteinspritzrichtung (R) und die Abgashauptströmungsrichtung (A) im Reaktionsmitteleinspritzbereich (16) zueinander in einem Winkel aufeinandertreffen. Die Reaktionsmittelauffangflächen 24 können parallel, gekrümmt, in verschiedenen Längen oder hintereinander ausgeführt sein, und dabei im Rohr bzw. aneinander befestigt sein.

## Beschreibung

Die vorliegende Erfindung betrifft eine Abgasanlage für eine Brennkraftmaschine.

Um insbesondere bei in Verbindung mit Diesel-Brennkraftmaschinen eingesetzten Abgasanlagen zu gewährleisten, dass die zunehmend strenger werdenden gesetzlichen Anforderungen an den Schadstoffausstoß, insbesondere den Stickoxidausstoß, erfüllt werden können, wird in das in derartigen Abgasanlagen strömende Abgas ein Reaktionsmittel, beispielsweise eine Harnstoff/Wasser-Lösung, eingespritzt. In einer stromabwärts des Reaktionsmitteleinspritzbereichs angeordneten SCR-Katalysatoranordnung werden vermittels einer selektiven katalytischen Reduktion die im Abgas enthaltenen Stickoxide mit dem im Reaktionsmittel enthaltenen Ammoniak zu Wasser und Stickstoff umgewandelt.

Es ist die Aufgabe der vorliegenden Erfindung, eine Abgasanlage für eine Brennkraftmaschine vorzusehen, mit welcher eine effiziente Verdampfung und Durchmischung des in einem Reaktionsmitteleinspritzbereich eines Abgasströmungskanals eingespritzten Reaktionsmittels mit im Abgasströmungskanal strömendem Abgas erreicht wird.

Erfindungsgemäß wird diese Aufgabe gelöst durch eine Abgasanlage für eine Brennkraftmaschine, umfassend einen von Abgas in einer Abgashauptströmungsrichtung durchströmbaren Abgasströmungskanal und eine Reaktionsmitteleinspritzanordnung zum Einspritzen von Reaktionsmittel in einem Reaktionsmitteleinspritzbereich des Abgasströmungskanals in einer Reaktionsmittelhaupteinspritzrichtung, wobei die Reaktionsmittelhaupteinspritzrichtung und die Abgashauptströmungsrichtung im Reaktionsmitteleinspritzbereich zueinander nicht parallel und nicht orthogonal sind.

Eine derartige Reaktionsmittelhaupteinspritzrichtung gewährleistet, dass ohne wesentliche Beeinträchtigung des Abgasstroms im Abgasströmungskanal das eingespritzte Reaktionsmittel im Wesentlichen alle Querschnittsbereiche des Abgasströmungskanals erreichen kann und dort mit Abgas durchmischt werden kann.

Um dabei die Abgasströmung so wenig als möglich zu beeinträchtigen, wird vorgeschlagen, dass die Reaktionsmittelhaupteinspritzrichtung und die Abgashauptströmungsrichtung im Reaktionsmitteleinspritzbereich zueinander unter einem spitzen Winkel stehen, wobei vorzugsweise die Reaktionsmittelhaupteinspritzrichtung und die Abgashauptströmungsrichtung im Reaktionsmitteleinspritzbereich zueinander unter einem Winkel im Bereich von 20° bis 70°, vorzugsweise 40° bis 60°, stehen.

Das durch die Reaktionsmitteleinspritzanordnung, allgemein auch als Injektor bezeichnet, eingespritzte Reaktionsmittel gelangt im Allgemeinen in Spray- bzw. Tröpfchenform in den Reaktionsmitteleinspritzbereich des Abgasströmungskanals. Um dabei eine effiziente Durchmischung des Reaktionsmittels mit im Abgasströmungskanal strömendem Abgas zu erreichen, wird weiter vorgeschlagen, dass im Reaktionsmitteleinspritzbereich eine Reaktionsmittelauffanganordnung mit einer Mehrzahl mit vermittels der Reaktionsmitteleinspritzanordnung eingespritztem Reaktionsmittel benetzbarer Reaktionsmittelauffangflächen vorgesehen ist. Die mit Reaktionsmittel benetzbaren und im Abgasstrom liegenden Reaktionsmittelauffangflächen können durch das Abgas selbst erwärmt werden und unterstützen somit die Abdampfung des auf diese auftreffenden bzw. diese benetzenden Reaktionsmittels. Auch dann, wenn beispielsweise bei Inbetriebnahme einer Brennkraftmaschine oder bei Betreiben mit vergleichsweise geringer Last die Reaktionsmittelauffangflächen eine vergleichsweise niedrige Temperatur aufweisen, wirken sie als Prallflächen, von welchen auf diese auftreffendes bzw. diese benetzendes Reaktionsmittel abprallt und somit gleichermaßen effizient mit dem die Reaktionsmittelauffangflächen umströmenden Abgas vermischt wird. Dabei können wenigstens zwei, vorzugsweise alle Reaktionsmittelauffangflächen zueinander wenigstens bereichsweise parallel sein.

Zum Bereitstellen der Reaktionsmittelauffangflächen kann die Reaktionsmittelauffanganordnung wenigstens ein wenigstens eine Reaktionsmittelauffangfläche aufweisendes Reaktionsmittelauffangflächenelement umfassen.

Um in einfacher Art und Weise eine vergleichsweise große Gesamtfläche der Reaktionsmittelauffangflächen bereitstellen zu können, wird vorgeschlagen, dass wenigstens ein Reaktionsmittelauffangflächenelement onduliert ausgebildet ist.

Ferner kann in vergleichsweise kleinem Bauraum eine große Gesamtfläche der Reaktionsmittelauffangflächen bereitgestellt werden, wenn wenigstens zwei Reaktionsmittelauffangflächenelemente ineinander geschachtelt angeordnet sind.

Für eine stabile Halterung der Reaktionsmittelauffanganordnung wird vorgeschlagen, dass wenigstens ein Reaktionsmittelauffangflächenelement an einem Abgasführungsrohr vorzugsweise durch Verschweißung festgelegt ist.

Dabei kann ein einfacher, gleichwohl kompakter Aufbau dadurch realisiert werden, dass wenigstens ein Reaktionsmittelauffangflächenelement an einem anderen Reaktionsmittelauffangflächenelement vorzugsweise durch Verschweißung festgelegt ist. Insbesondere kann vorgesehen sein, dass ein Reaktionsmittelauffangflächenelement an dem Abgasführungsrohr festgelegt ist und wenigstens ein weiteres Reaktionsmittelauffangflächenelement an dem einen Reaktionsmittelauffangflächenelement getragen ist.

Um den Abgasstrom im Abgasströmungskanal durch das Bereitstellen der Reaktionsmittelauffanganordnung im Wesentlichen nicht zu beeinträchtigen, wird vorgeschlagen, dass wenigstens eine, vorzugsweise jede Reaktionsmittelauffangfläche sich im Wesentlichen in Richtung der Abgashauptströmungsrichtung im Bereich des Reaktionsmitteleinspritzbereichs erstreckt.

Dabei kann vor allem dann, wenn der Reaktionsmitteleinspritzbereich in einem Krümmungsbereich des Abgasströmungskanals liegt, vorgesehen sein, dass wenigstens eine, vorzugsweise jede Reaktionsmittelauffangfläche wenigstens bereichsweise gekrümmt ist. Die Reaktionsmittelauffangflächen können somit auch als Strömungsleitflächen zum Umlenken des Abgasstroms im Reaktionsmitteleinspritzbereich wirken.

Wenn wenigstens zwei Reaktionsmittelauffangflächen im Wesentlichen quer zur Abgashauptströmungsrichtung nebeneinander angeordnet sind, kann der Abgasstrom in zwischen jeweils zwei nebeneinander angeordneten Reaktionsmittelauffangflächen begrenzte Segmente unterteilt werden, wobei in jedem dieser Segmente des Abgasstroms dann eine Durchmischung von Abgas mit im Bereich einer jeweiligen Reaktionsmittelauffangfläche abgelenktem oder abgedampftem Reaktionsmittel erfolgen kann. Das Auftreffen eines wesentlichen Anteils des Reaktionsmittels auf eine den Abgasströmungskanal umgrenzende und insbesondere in einer Startphase des Verbrennungsbetriebs vergleichsweise kalte Wandung eines Abgasströmungsrohrs kann somit weitestgehend verhindert werden.

Um die Vermischung des Reaktionsmittels mit im Abgasströmungskanal strömendem Abgas noch weiter verbessern zu können, wird vorgeschlagen, dass wenigstens zwei Reaktionsmittelauffangflächen in der Abgashauptströmungsrichtung im Reaktionsmitteleinspritzbereich aufeinanderfolgend angeordnet sind.

Ferner kann zur verbesserten Benetzung der Reaktionsmittelauffangflächen vorgesehen sein, dass wenigstens zwei Reaktionsmittelauffangflächen zueinander unterschiedliche Erstreckungslängen nach stromaufwärts entgegen in der Abgashauptströmungsrichtung im Reaktionsmitteleinspritzbereich aufweisen. Somit kann gewährleistet werden, dass nebeneinander liegende Reaktionsmittelauffangflächen sich nicht vollständig gegenseitig überdecken und somit eine der Flächen die andere Fläche von dem eingespritzten Reaktionsmittel abschirmt, insbesondere dann, wenn die Reaktionsmittelauffangflächen quer zur Abgashauptströmungsrichtung nebeneinander liegen.

Die vorliegende Erfindung wird nachfolgend mit Bezug auf die beiliegenden Figuren detailliert beschrieben. Es zeigt:
- Fig. 1: in prinzipartiger Darstellung einen Abschnitt einer Abgasanlage für eine Brennkraftmaschine;
- Fig. 2: eine der Fig. 1 entsprechende Ansicht einer alternativen Ausgestaltungsart einer Abgasanlage;
- Fig. 3: eine Querschnittsansicht der Abgasanlage Fig. 1, geschnitten längs einer Linie III-III in Fig. 1;
- Fig. 4: eine der Fig. 3 entsprechende Querschnittsansicht einer alternativen Ausgestaltungsart der Abgasanlage;
- Fig. 5: eine weitere der Fig. 3 entsprechende Querschnittsansicht einer alternativen Ausgestaltungsart der Abgasanlage;
- Fig. 6: eine weitere der Fig. 3 entsprechende Querschnittsansicht einer alternativen Ausgestaltungsart der Abgasanlage.

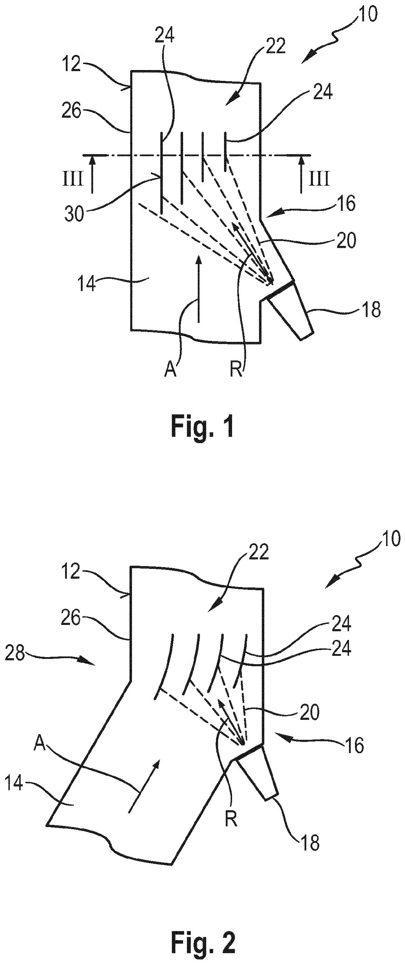

In Fig. 1 ist ein Abschnitt einer Abgasanlage 10 für eine Brennkraftmaschine dargestellt. Die Abgasanlage 10 umfasst ein ein- oder mehrteilig ausgebildetes Abgasströmungsrohr 12, in welchem ein von Abgas in einer Abgashauptströmungsrichtung A durchströmbarer Abgasströmungskanal 14 ausgebildet ist. Es ist darauf hinzuweisen, dass selbstverständlich lokal Abweichungen in der Strömungsrichtung des Abgases von der Abgashauptströmungsrichtung A, beispielsweise hervorgerufen durch Turbulenzen oder Krümmungsbereiche des Abgasströmungsrohrs 12, auftreten können.

In einem allgemein mit 16 bezeichneten Reaktionsmitteleinspritzbereich des Abgasströmungskanals 14 wird vermittels einer Reaktionsmitteleinspritzanordnung 18 Reaktionsmittel in im Abgasströmungskanal 14 in der Abgashauptströmungsrichtung A strömendes Abgas eingespritzt. Das Reaktionsmittel wird von der Reaktionsmitteleinspritzanordnung 18 in einer Reaktionsmittelhaupteinspritzrichtung R abgegeben und breitet sich im Reaktionsmitteleinspritzbereich 16 näherungsweise in Form eines Sprühkegels 18 aus.

Die Reaktionsmittelhaupteinspritzrichtung, welche näherungsweise eine Zentrallinie des Sprühkegels 12 sein kann, und die Abgashauptströmungsrichtung A im Reaktionsmitteleinspritzbereich 16 stehen zueinander unter einem spitzen Winkel, sind also nicht parallel zueinander und auch nicht orthogonal zueinander. Vorzugsweise liegt dieser Winkel im Bereich zwischen 20° und 70°.

Im Reaktionsmitteleinspritzbereich 16 ist eine Reaktionsmittelauffanganordnung 22 vorgesehen, welche eine Mehrzahl von Reaktionsmittelauffangflächen 24 bereitstellt. Die Reaktionsmittelauffangflächen 24 erstrecken sich im Wesentlichen in der Abgashauptströmungsrichtung A, sind zu dieser also im Wesentlichen parallel, so dass eine Beeinträchtigung des Abgasstroms im Abgasströmungskanal 14 vermieden wird. Da die Reaktionsmittelauffangflächen 24 zur Abgashauptströmungsrichtung A im Wesentlichen parallel liegen, weisen sie zur Reaktionsmittelhaupteinspritzrichtung R gleichermaßen einen im Wesentlichen spitzen Winkel auf. Wie in Fig. 1 angedeutet, trifft das von der Reaktionsmitteleinspritzanordnung 18 in den Reaktionsmitteleinspritzbereich 16 eingespritzte Reaktionsmittel auf die zueinander im Wesentlichen parallel liegenden Reaktionsmittelauffangflächen 24 der Reaktionsmittelauffanganordnung 22 auf. Das Reaktionsmittel kann diese Reaktionsmittelauffangflächen 24 somit benetzen. Da die Reaktionsmittelauffangflächen bzw. diese bereitstellende und nachfolgend detaillierter erläuterte Reaktionsmittelauffangflächenelemente an beiden Seiten von im Abgasströmungskanal 14 strömendem Abgas umströmt werden, werden die Reaktionsmittelauffangflächenelemente durch den Abgasstrom vergleichsweise schnell erwärmt und unterstützen somit die Abdampfung von die Reaktionsmittelauffangflächen 24 benetzendem Reaktionsmittel in das Abgas, wodurch eine effiziente Durchmischung des Reaktionsmittels mit dem zwischen den Reaktionsmittelauffangflächen 24 hindurch strömenden und somit geschichteten Abgasstrom erreicht wird. Ferner schirmen die im Reaktionsmitteleinspritzbereich 16 angeordneten Reaktionsmittelauffangflächen 24 eine Wandung 26 des Abgasströmungsrohrs 12 vor dem in den Reaktionsmittelbereich 16 eingespritzten Reaktionsmittel ab, so dass gewährleistet ist, dass das Reaktionsmittel in dem im Allgemeinen heißeren Innenbereich des Abgasstroms verbleibt und dort mit dem Abgas durchmischt wird. Vor allem bei noch vergleichsweise niedriger Temperatur der die Reaktionsmittelauffangflächen 24 bereitstellenden Reaktionsmittelauffangflächenelemente dienen diese als Abprallelemente für das auf diese auftreffende bzw. diese benetzende Reaktionsmittel, wodurch die Vermischung des Reaktionsmittels mit dem im Abgasströmungskanal 14 strömendem Abgas ebenfalls verbessert wird.

Man erkennt in Fig. 1, dass die quer zur Abgashauptströmungsrichtung A im Reaktionsmitteleinspritzbereich 16 nebeneinander liegenden Reaktionsmittelauffangflächen in der Abgashauptströmungsrichtung A zueinander unterschiedliche Erstreckungslängen aufweisen, insbesondere im stromaufwärtigen Bereich einander nicht vollständig überlappen. Somit ist gewährleistet, dass die Reaktionsmittelauffangflächen 24 sich nicht gegenseitig gegen das Auftreffen von unter spitzen Winkel auf diese zu eingespritztem Reaktionsmittel abschirmen. Dabei ist eine Anordnung vorteilhaft, bei welcher die der Reaktionsmitteleinspritzanordnung 18 quer zur Abgashauptströmungsrichtung A am nächsten liegend positionierte Reaktionsmittelauffangfläche 24, in Fig. 1 also die am weitesten rechts positionierte Reaktionsmittelauffangfläche 24, am weitesten stromabwärts positioniert ist bzw. beginnt, während eine quer zur Abgashauptströmungsrichtung A am weitesten von der Reaktionsmitteleinspritzanordnung 18 positionierte Reaktionsmittelauffangfläche 24 am weitesten stromaufwärts angeordnet ist bzw. beginnt.

Die Fig. 2 zeigt eine Ausgestaltungsform einer Abgasanlage 10, bei welcher der Reaktionsmitteleinspritzbereich 16 in einem Knickbereich 28 des Abgasströmungsrohrs 12 bzw. des darin gebildeten Abgasströmungskanals 14 positioniert ist. Auch bei dieser Ausgestaltungsform weisen die Abgashauptströmungsrichtung A im Reaktionsmitteleinspritzbereich 16 und die Reaktionsmittelhaupteinspritzrichtung R zueinander im Wesentlichen einen spitzen Winkel auf, der im vorangehend angegebenen Wertebereich liegen kann.

Die Reaktionsmittelauffangfläche 24 bzw. die diese aufweisenden Reaktionsmittelauffangflächenelemente der Reaktionsmittelauffanganordnung 22 sind, angepasst an die angewinkelte Konfiguration des Abgasströmungsrohrs 12, gekrümmt ausgebildet, so dass sie zusätzlich auch dazu dienen, den Abgasstrom im Reaktionsmitteleinspritzbereich 16 umzulenken. Aufgrund dieser durch die Reaktionsmittelauffangflächenelemente bewirkten Umlenkung wird im Bereich der Reaktionsmittelauffanganordnung 22 eine verstärkte Verwirbelung erzeugt, welche die Durchmischung vom Abgas und an den Reaktionsmittelauffangflächen 24 abgedampftem bzw. abgepralltem Reaktionsmittel weiter verbessert.

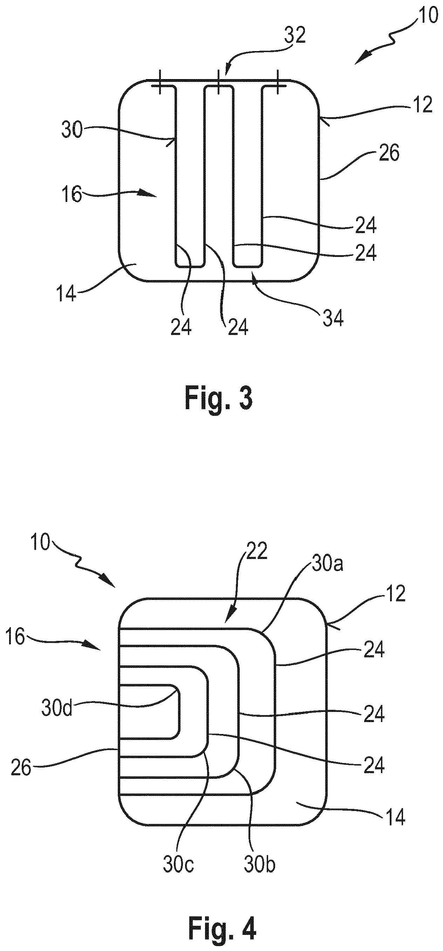

Die Fig. 3 zeigt eine Ausgestaltungsart einer Reaktionsmittelauffanganordnung 22 mit einem mit ondulierter Gestalt ausgebildeten Reaktionsmittelauffangflächenelement 30. Im Bereich von Wellenscheiteln 32 ist das Reaktionsmittelauffangflächenelement 30 vorzugsweise durch Verschweißung, beispielsweise Widerstandsschweißen, an der Wandung 26 des Abgasströmungsrohrs 12 festlegelegt, vorzugsweise in einem in einer Höhenrichtung oberen Bereich des Abgasströmungsrohrs 12 bei in ein Fahrzeug integrierter Abgasanlage 10. Auf diese Art und Weise können im Bereich dieser Anbindung des Reaktionsmittelauffangflächenelements 30 an die Wandung 26 des Abgasströmungsrohrs 12 Ansammlungen von Reaktionsmittel vermieden werden. Die anderen Scheitelbereiche 34 des Reaktionsmittelauffangflächenelements 30 sind vorzugsweise nicht in Kontakt mit der Wandung 26 des Abgasströmungsrohrs 12, so dass das Reaktionsmittelauffangflächenelement 30 sich ohne der Gefahr von Zwängungen oder Verformungen im Abgasstrom ausdehnen kann.

Das in Fig. 3 dargestellte Reaktionsmittelauffangflächenelement 30 stellt insgesamt vier der Reaktionsmitteleinspritzanordnung 18 zugewandt liegende Reaktionsmittelauffangflächen 24 bereit. Es ist selbstverständlich, dass bei einer größeren Anzahl an Wellen auch mehrere derartige Reaktionsmittelauffangflächen 24 bereitgestellt werden können. Auch können mehrere derartige onduliert ausgebildete Reaktionsmittelauffangflächenelemente 30 quer zur Abgashauptströmungsrichtung A nebeneinanderliegend angeordnet sein bzw. in der Abgashauptströmungsrichtung A aufeinanderfolgend angeordnet sein. Die Anzahl der Reaktionsmittelauffangflächen, welche quer zur Abgashauptströmungsrichtung nebeneinanderliegend vorgesehen sind oder/und welche in der Abgashauptströmungsrichtung aufeinanderfolgend angeordnet sind, ebenso wie die Erstreckungslängen der Reaktionsmittelauffangflächen 24 in der Abgashauptströmungsrichtung bzw. ausgehend vom Bereich der Festlegung an der Wandung 26 in den Abgasströmungskanal 14 hinein können in Abhängigkeit von der in einer jeweiligen Abgasanlage 10 erforderlichen Reaktionsmitteleinspritzmenge ausgewählt werden. Je kürzer die Reaktionsmittelauffangflächen 24 quer zur Abgashauptströmungsrichtung A bzw. in der Abgashauptströmungsrichtung A ausgedehnt sind, desto weniger tragen sie zur Reaktionsmittelverdampfung bei und desto mehr haben sie die Funktion von Prallelementen, an welchen das auf diese auftreffende Reaktionsmittel abprallt und auf diese Art und Weise verstärkt mit im Abgasströmungskanal 14 strömendem Abgas durchmischt wird.

Eine alternative Ausgestaltungsart der Reaktionsmittelauffanganordnung 22 ist in Fig. 4 dargestellt. Bei diesem Aufbau weist die Reaktionsmittelauffanganordnung 22 beispielsweise vier ineinander geschachtelt angeordnete Reaktionsmittelauffangelemente 30a, 30b, 30c, 30d auf. Die Reaktionsmittelauffangelemente 30a, 30b, 30c, 30d weisen einen im Wesentlichen U-förmigen Querschnitt auf und sind im Bereich der freien Enden ihrer jeweiligen U-Schenkel an der Wandung 26 des Abgasströmungsrohrs 12 beispielsweise durch Verschweißung festgelegt. An ihrer quer zur Abgashauptströmungsrichtung A der Reaktionsmitteleinspritzanordnung 18 zugewandten Seite weisen die vier Reaktionsmittelauffangflächenelemente 30a, 30b, 30c, 30d jeweils eine Reaktionsmittelauffangfläche 24 auf.

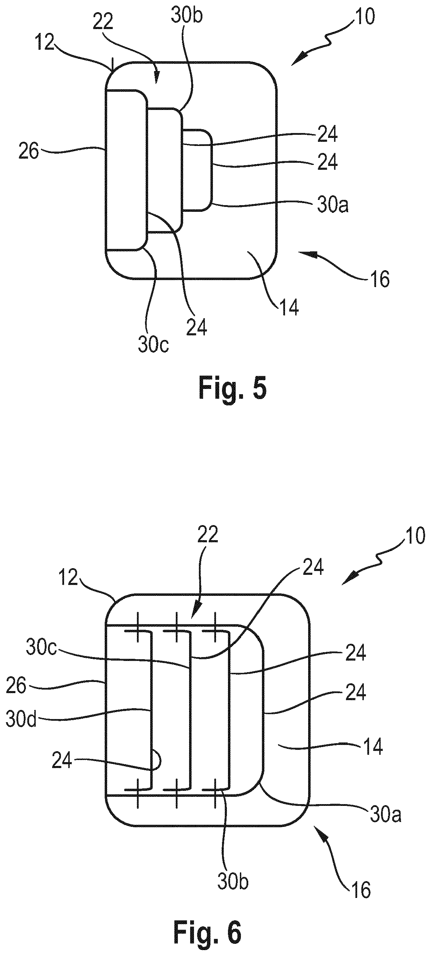

Die in Fig. 5 dargestellte Ausgestaltungsform der Reaktionsmittelauffanganordnung 22 umfasst drei Reaktionsmittelauffangelemente 30a, 30b, 30c, welche im Querschnitt wieder im Wesentlichen U-förmig ausgebildet sind und an ihrer quer zur Abgashauptströmungsrichtung A der Reaktionsmitteleinspritzanordnung 18 zugewandten Seite jeweils eine Reaktionsmittelauffangfläche 24 bereitstellen. Das der Reaktionsmitteleinspritzanordnung 18 am nächsten liegend positionierte Reaktionsmittelauffangflächenelement 30a ist im freien Endbereich seiner U-Schenkel im Bereich der Reaktionsmittelauffangfläche 24a des nächstfolgenden Reaktionsmittelauffangflächenelements 30b beispielsweise durch Verschweißung festgelegt. Dieses Reaktionsmittelauffangflächenelement 30b ist im Bereich der freien Enden seiner U-Schenkel am Reaktionsmittelauffangflächenelement 30c im Bereich von dessen Reaktionsmittelauffangfläche 24 festgelegt. Somit sind die beiden Reaktionsmittelauffangflächenelemente 30a, 30b über das mit seinen U-Schenkeln an der Wandung 26 des Abgasströmungsrohrs 12 festgelegte Reaktionsmittelauffangflächenelement 30c an der Wandung 26 getragen.

Bei der in Fig. 6 dargestellten Ausgestaltungsform weist die Reaktionsmittelauffanganordnung 22 vier Reaktionsmittelauffangflächenelemente 30a, 30b, 30c, 30d auf. Das im Wesentlichen in U-förmiger Gestalt bereitgestellte Reaktionsmittelauffangflächenelement 30a ist im Bereich der freien Enden seiner U-Schenkel an der Wandung 26 des Abgasströmungsrohrs 12 festgelegt und stellt die der Reaktionsmitteleinspritzanordnung 18 am nächsten liegend positionierte Reaktionsmittelauffangfläche 24 bereit. Im Inneren der U-Kontur des Reaktionsmittelauffangflächenelements 30a sind quer zur Abgashauptströmungsrichtung A drei Reaktionsmittelauffangflächenelemente 30b, 30c, 30d vorzugsweise mit gleichmäßigem Abstand zueinander angeordnet, wobei auch diese Reaktionsmittelauffangflächenelemente 30b, 30c, 30d eine U-förmige Gestalt aufweisen können und im Bereich ihrer U-Schenkel beispielsweise durch Verschweißung an das Reaktionsmittelauffangflächenelement 30a angebunden sein können und somit über dieses an der Wandung 26 getragen sein können. Ähnlich wie bei der in Fig. 4 dargestellten Ausgestaltungsart sind auch hier die Reaktionsmittelauffangflächenelemente 30a, 30b, 30c, 30d ineinander geschachtelt angeordnet.

Bei allen vorangehend mit Bezug auf die Fig. 3 bis 6 beschriebenen Ausgestaltungsformen der Reaktionsmittelauffanganordnung 22 sind die im Wesentlichen lamellenartig ausgebildeten Reaktionsmittelauffangflächenelemente 30 bzw. 30a, 30b, 30c, 30d vorzugsweise aus Blechmaterial geformt. In allen Ausgestaltungsformen kann die Reaktionsmittelauffanganordnung 22 den in den Fig. 1 und 2 erkennbaren Versatz bzw. versetzten Beginn ihrer jeweiligen Reaktionsmittelauffangflächen 24 im stromaufwärtigen Bereich aufweisen.

Durch den erfindungsgemäß vorgesehenen spitzen Winkel zwischen der Abgashauptströmungsrichtung A und der Reaktionsmittelhaupteinspritzrichtung R und begünstigt durch die im Reaktionsmitteleinspritzbereich 16 liegenden Reaktionsmittelauffangflächen 24 wird eine über den Querschnitt des Abgasströmungskanals 14 näherungsweise gleichmäßige Reaktionsmittelverdampfung bzw. ein Abprallen des Reaktionsmittels hervorgerufen, so dass auch über den Querschnitt näherungsweise gleichmäßig das Reaktionsmittel mit im Abgasströmungskanal 14 strömendem Abgas vermischt werden kann, und zwar insbesondere auch in einem Kaltstartzustand bzw. in einem Betriebszustand mit niedriger Last und entsprechend geringem Schadstoffausstoß. Dies gewährleistet eine effiziente Durchmischung des Abgases mit Reaktionsmittel und dementsprechend auch eine effiziente Durchführung der selektiven katalytischen Reduktion an der stromabwärts des Reaktionsmitteleinspritzbereichs 16 liegenden SCR-Katalysatoranordnung.

Es sei abschließend darauf hingewiesen, dass selbstverständlich insbesondere die Querschnittsgeometrie sowohl des Abgasströmungsrohrs 12 als auch der Reaktionsmittelauffanganordnung 22 von der dargestellten Querschnittsgeometrie abweichen können. Insbesondere könnte das Abgasführungsrohr 12 auch eine im Wesentlichen kreisrunde Querschnittsgeometrie aufweisen.

## Patentansprüche

1. Abgasanlage für eine Brennkraftmaschine, umfassend einen von Abgas in einer Abgashauptströmungsrichtung (A) durchströmbaren Abgasströmungskanal (14) und eine Reaktionsmitteleinspritzanordnung (18) zum Einspritzen von Reaktionsmittel in einem Reaktionsmitteleinspritzbereich (16) des Abgasströmungskanals (14) in einer Reaktionsmittelhaupteinspritzrichtung (R), wobei die Reaktionsmittelhaupteinspritzrichtung (R) und die Abgashauptströmungsrichtung (A) im Reaktionsmitteleinspritzbereich (16) zueinander nicht parallel und nicht orthogonal sind.

2. Abgasanlage nach Anspruch 1, **dadurch gekennzeichnet, dass** die Reaktionsmittelhaupteinspritzrichtung (R) und die Abgashauptströmungsrichtung (A) im Reaktionsmitteleinspritzbereich (16) zueinander unter einem spitzen Winkel stehen.

3. Abgasanlage nach Anspruch 2, **dadurch gekennzeichnet, dass** die Reaktionsmittelhaupteinspritzrichtung (R) und die Abgashauptströmungsrichtung (A) im Reaktionsmitteleinspritzbereich (16) zueinander unter einem Winkel im Bereich von 20° bis 70°, vorzugsweise 40° bis 60°, stehen.

4. Abgasanlage nach einem der vorangehenden Ansprüche, **dadurch gekennzeichnet, dass** im Reaktionsmitteleinspritzbereich (16) eine Reaktionsmittelauffanganordnung (22) mit einer Mehrzahl mit vermittels der Reaktionsmitteleinspritzanordnung (18) eingespritztem Reaktionsmittel benetzbarer Reaktionsmittelauffangflächen (24) vorgesehen ist.

5. Abgasanlage nach Anspruch 4, **dadurch gekennzeichnet, dass** wenigstens zwei, vorzugsweise alle Reaktionsmittelauffangflächen (24) zueinander wenigstens bereichsweise parallel sind.

6. Abgasanlage nach Anspruch 4 oder 5, **dadurch gekennzeichnet, dass** die Reaktionsmittelauffanganordnung (22) wenigstens ein wenigstens eine Reaktionsmittelauffangfläche (24) aufweisendes Reaktionsmittelauffangflächenelement (30; 30a, 30b, 30c, 30d) umfasst.

7. Abgasanlage nach Anspruch 6, **dadurch gekennzeichnet, dass** wenigstens ein Reaktionsmittelauffangflächenelement (30) onduliert ausgebildet ist.

8. Abgasanlage nach Anspruch 6 oder 7, **dadurch gekennzeichnet, dass** wenigstens zwei Reaktionsmittelauffangflächenelemente (30a, 30b, 30c, 30d) ineinander geschachtelt angeordnet sind.

9. Abgasanlage nach einem der Ansprüche 6-8, **dadurch gekennzeichnet, dass** wenigstens ein Reaktionsmittelauffangflächenelement (30; 30a; 30c) an einem Abgasströmungsrohr (12) vorzugsweise durch Verschweißung festgelegt ist.

10. Abgasanlage nach einem der Ansprüche 6-9, **dadurch gekennzeichnet, dass** wenigstens ein Reaktionsmittelauffangflächenelement (30b; 30b, 30c, 30d) an einem anderen Reaktionsmittelauffangflächenelement (30c; 30a) vorzugsweise durch Verschweißung festgelegt ist.

11. Abgasanlage nach Anspruch 9 und Anspruch 10, **dadurch gekennzeichnet, dass** ein Reaktionsmittelauffangflächenelement (30c; 30a) an dem Abgasströmungsrohr (16) festgelegt ist und wenigstens ein weiteres Reaktionsmittelauffangflächenelement (30a, 30b; 30b, 30c, 30d) an dem einen Reaktionsmittelauffangflächenelement (30c; 30a) getragen ist.

12. Abgasanlage nach einem der Ansprüche 4-11, **dadurch gekennzeichnet, dass** wenigstens eine, vorzugsweise jede Reaktionsmittelauffangfläche (24) sich im Wesentlichen in Richtung der Abgashauptströmungsrichtung (A) im Bereich des Reaktionsmitteleinspritzbereichs (16) erstreckt.

13. Abgasanlage nach einem der Ansprüche 4-12, **dadurch gekennzeichnet, dass** wenigstens eine, vorzugsweise jede Reaktionsmittelauffangfläche (24) wenigstens bereichsweise gekrümmt ist.

14. Abgasanlage nach einem der Ansprüche 4-13, **dadurch gekennzeichnet, dass** wenigstens zwei Reaktionsmittelauffangflächen (24) im Wesentlichen quer zur Abgashauptströmungsrichtung (A) nebeneinander angeordnet sind.

15. Abgasanlage nach einem der Ansprüche 4-14, **dadurch gekennzeichnet, dass** wenigstens zwei Reaktionsmittelauffangflächen (24) in der Abgashauptströmungsrichtung (A) im Reaktionsmitteleinspritzbereich (16) aufeinanderfolgend angeordnet sind.

16. Abgasanlage nach einem der Ansprüche 4-15, **dadurch gekennzeichnet, dass** wenigstens zwei Reaktionsmittelauffangflächen (24) zueinander unterschiedliche Erstreckungslängen in Richtung stromaufwärts entgegen der Abgashauptströmungsrichtung (A) im Reaktionsmitteleinspritzbereich (16) aufweisen.
